Europäisches Patentamt

European Patent Office

Office européen des brevets

(19)

(11) Publication number: **0 153 516**
**A1**

## (12) EUROPEAN PATENT APPLICATION

(21) Application number: **84301183.4**

(22) Date of filing: **23.02.84**

(51) Int. Cl.⁴: **F 16 K 17/04**

(43) Date of publication of application:
**04.09.85 Bulletin 85/36**

(84) Designated Contracting States:
**DE FR GB**

(71) Applicant: **MECHANICAL TECHNOLOGY,
INCORPORATED**
**968 Albany-Shaker Road**
**Latham, NY 12110(US)**

(72) Inventor: **Bergman, Ulf Crister**
**Vendelsfridsgaten 4 C**
**S-217 64 Malmo(SE)**

(74) Representative: **Jennings, Roy Alfred et al,
GILL JENNINGS & EVERY 53-64 Chancery Lane
London WC2A 1HN(GB)**

(54) Safety valve.

(57) A safety valve has a housing (1) containing a valve member (2) having a resilient sealing gasket (9) which is biased against a seat (8) by a spring (3). To prevent the resilient gasket (9) being blown out or otherwise damaged by high pressure fluid flowing through the valve from an inlet (5) to an outlet (7), the gasket (9) is surrounded by a sleeve (10) having an inwardly directed flange (13). The sleeve (10) is movable upwards and downwards on the member (2) within limits determined by a pin (11) fitting in oversized holes in the sleeve (10) and by engagement of the top of the sleeve with a shoulder (22) on the valve member. The sleeve (1) does not therefore impede seating of the gasket (9) on the seat (8) and also moves down to protect the gasket (9) still further when the valve opens.

Fig.1.

1.


Safety Valve


This invention relates to safety pressure relief valves comprising a housing, a valve member axially movable in the housing from a closed valve position to an open valve position, a prestressed compression spring acting between the valve member and the housing, an inlet opening located centrally in the housing and surrounded by an annular valve seat lying in a plane perpendicular to the direction of movement of the valve member, an outlet opening in the housing remote from the seat, and a resilient gasket or gland operatively associated with the valve member and adapted to abut the valve seat when the valve is in its closed position. When the valve member moves to its closed position, it prevents the passage of fluid through a high pressure inlet which is located centrally in the housing and opens into the housing through the valve seat, which lies in a plane perpendicular to the direction of movement of the valve member, and out through an outlet in the housing arranged remote from the seat.

Safety valves as described above may be used for very high differences in pressure across the valve seat - e.g. more than 20 MPA. During such use, the extremely high fluid velocities which occur when the valve opens may deform the resilient gland or gasket and such deformations will have detrimental influence on the valve closing ability. Hitherto, the gland or gasket has been designed as a disc or a toroid ring fastened, e.g. vulcanised, to the valve member.

The object of the invention is to provide a safety valve as described above in which the resilient gland or gasket is secured to the valve member in such a way that the desired function of the safety valve is obtained even under extreme conditions.

To this end, according to this invention, a safety valve as initially described is characterised by a shoulder on the valve member, a sleeve surrounding the valve member, the sleeve having a top end and a bottom end and having an internal diameter greater than the outer diameter of the valve member to allow relative axial movement of the sleeve in an upward and downward direction, the top end of the sleeve limiting the upward axial movement of the sleeve relative to the valve member by engagement with the shoulder, the bottom end of the sleeve forming an axial extension beyond the valve member and surrounding the resilient gasket or gland and the bottom end of the sleeve contacting a part of the valve seat when the valve is in its closed position so that the sleeve acts as a support for the gasket or gland when the valve is in its closed position, means connecting the sleeve to the valve member to limit axial movement of the sleeve relative to the valve member in a downward direction when the valve is in its open position so that the sleeve shields the gasket or gland from fluid flowing through the valve at high velocity when the valve is in its open position, and an inwardly directed flange on the bottom end of the sleeve for engaging the resilient gasket or gland so that the axial movement of the flange in the upward direction relative to the valve member compresses the gasket or gland when the valve is in its closed position, and expansion of the resilient gasket or gland against the flange causes axial movement of the sleeve in the downward direction as the valve opens, the connecting means also allowing the limited movement of the sleeve relative to the valve member in the upward direction when the valve is in its closed position, and the limitation of the upward movement of the sleeve relative to the valve member also limiting the compression of the gasket or gland between the seat and the valve member.

An example of a safety valve in accordance with the invention is illustrated in the accompanying drawings in which:-

Figure 1 is a vertical section through the safety valve with the valve closed;

Figure 2 is a vertical section corresponding to a part of Figure 1 but showing the valve open and the parts in different relative positions; and,

Figure 3 is a view similar to that of Figure 2, but showing the parts in still different relative positions.

The valve comprises a housing 1 shaped as a hollow cylinder and containing a valve member 2 axially movable therein. The valve member 2 is biased axially downwards by a prestressed compression spring 3 acting against a cover 4 forming a part of the housing 1. A first opening 5 in the housing 1 is located centrally and constitutes an inlet opening from the end of a duct connection 6 to a high pressure fluid vessel (not shown). A second opening 7 in the housing forms an outlet and is vented to the atmosphere or may be connected to a low pressure reservoir (not shown).

The interior surface area of the housing 1 surrounding the inlet 5 is designated by 8 and constitutes a valve seat adapted to be engaged by a resilient gasket or gland 9 attached to the lower end of the valve member 2. The valve seat 8 is also adapted to be engaged by a metal sleeve 10 surrounding a lower part 2a of the valve member 2 and connected thereto by a pin 11 passed through coaxially arranged holes in the valve member 2 and the sleeve 10. The holes in the sleeve 10 are of a diameter greater than the diameter of the pin 11, thus allowing limited relative axial movement of the sleeve 10 and the valve member 2.

The inner diameter of the sleeve 10 is somewhat greater - e.g. 0.5 mm - than the outer diameter of the lower part 2a of the sleeve 2. An axially active shoulder surface 22 on the valve member 2 and shoulder surfaces 12 on the sleeve 10 limit the axial movements of the sleeve 10 upwards relative to the valve member 2.

The resilient gasket or gland 9 is of disc-like shape having a central part of almost uniform thickness and a peripheral bead of generally circular cross-section along its periphery which is of a larger axial dimension. The material used may be a synthetic rubber of the type sold under the trade name Neoprene.

At its lower end the sleeve 10 is provided with a flange 13 engaging the gasket or gland 9 by a surface tapering frusto conically towards the valve seat engaging end, that is the lower end of the sleeve 10.

The safety valve described above and shown in the drawings operates as follows:-

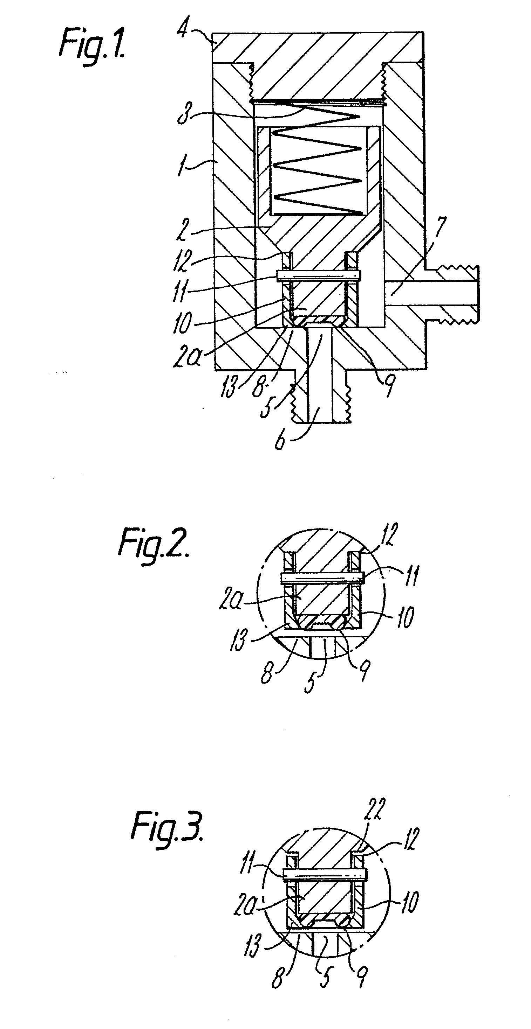

In the relative positions of the parts shown in Figure 1 the valve is closed and, in use, a high pressure prevails in the duct 6. The resilient gasket or gland 9 is forced against the inner frusto-conically tapering surface of the flange 13. The gasket or gland 9 is also forced against the small gap between the sleeve 10 and the part 2a of the valve member 2 due to the low pressure prevailing in the gap.

When the pressure in the duct 6 exceeds a predetermined value, the spring 3 is compressed and the valve member 2 is axially displaced upwardly. The relative positions of the valve elements will now be as shown in Figure 2. Fluid now escapes through the inlet opening 5 into the valve housing and passes under the gasket or gland 9 and under the flange 13 at great velocity. However, due to the low static pressure between the sleeve 10 and part 2a the risk of blowing away the gasket or gland 9 is small.

Shortly after the opening of the safety valve the elasticity of the gasket or gland 9 may cause the sleeve 10 to move downwardly. A gap will now occur between the surfaces 12 and 22 and the downward movement of the sleeve 10 will further protect the gasket or gland 9 from being blown away. This situation is shown in Figure 3. As soon as the pressure in the duct 6 has decreased below a certain value the spring 3 will cause the valve member 2 to move downwards and the lower end surface of the sleeve 10 will contact the valve seat 8.

A further downward movement of the valve member 2 will cause a relative axial movement of the flange 13 and the part 2a causing a compression of the gasket or gland 9. The gasket or gland will now be firmly held by the flange 13 and as soon as the flow through the inlet opening 5 is stopped the pressure will again cause the gasket or gland to be pressed in the direction towards the gap between the sleeve 10 and the part 2a as shown in Figure 1.

CLAIMS

1. A safety pressure relief valve comprising a housing (1), a valve member (2) axially movable in the housing (1) from a closed valve position to an open valve position, a -prestressed compression spring (3) acting between the valve member (2) and the housing (1), an inlet opening (5) located centrally in the housing (1) and surrounded by an annular valve seat (8) lying in a plane perpendicular to the direction of movement of the valve member (2), an outlet opening (7) in the housing remote from the seat (8), and a resilient gasket or gland (9) operatively associated with the valve member (2) and adapted to abut the valve seat (8) when the valve is in its closed position, characterised by a shoulder (22) on the valve member (2), a sleeve (10) surrounding the valve member (2), the sleeve having a top end (12) and a bottom end and having an internal diameter greater than the outer diameter of the valve member (2) to allow relative axial movement of the sleeve in an upward and downward direction, the top end (12) of the sleeve (10) limiting the upward axial movment of the sleeve (10) relative to the valve member (2) by engagement with the shoulder (22), the bottom end of the sleeve (10) forming an axial extension beyond the valve member (2) and surrounding the resilient gasket or gland (9) and the bottom end of the sleeve (10) contacting a part of the valve seat (2) when the valve is in its closed position so that the sleeve acts as a support for the gasket or gland (9) when the valve is in its closed position, means (11) connecting the sleeve (10) to the valve member (2) to limit axial movement of the sleeve (10) relative to the valve member (2) in a downward direction when the valve is in its open position so that the sleeve (10) shields the gasket or gland (9) from fluid flowing through the valve at high velocity when the valve is in its open position, and an inwardly directed flange (13) on the bottom end of the sleeve (10) for engaging the resilient gasket or gland (9) so that the axial movement of the flange in the upward direction relative to the valve member (2) compresses the gasket or gland (9) when the valve is in its closed position and expansion of the resilient gasket or gland (9) against the flange (13) causes axial movement of the sleeve (10) in the downward direction as the valve opens, the connecting means (11) also allowing the limited movement of the sleeve (10) relative to the valve member(2) in the upward direction when the valve is in its closed position, and the limitation of the upward movement of the sleeve (10) relative to the valve member(2) also limiting the compression of the gasket or gland (9) between the seat (8) and the valve member (2).

2. A safety valve according to Claim 1, wherein the resilient gasket or gland (9) is of disc-like shape and includes a peripheral bead of generally circular radial cross-section, the thickness of the peripheral bead in the axial direction being greater than the thickness of the central portion of the gasket or gland (9).

3. A safety valve according to Claim 1 or Claim 2, wherein the means connecting the sleeve (10) to the valve member (2) comprises a pin (11) extending through holes in the valve member (2) and in the sleeve (10) perpendicular to the axis of the sleeve (10), the holes provided in the sleeve (10) having a diameter greater than that of the pin (11).

4. A safety valve according to Claim 1, wherein the resilient gasket or gland (9) has a downwardly extending peripheral portion positioned to bypass the flange in the axial direction when the gasket or gland (9) is compressed by the valve member (2).

5. A safety valve according to any one of Claims 1 to 4, in which the flange (13) has an internal surface tapering frusto-connically towards the lower end of the sleeve (10).

0153516

Fig.1.

Fig.2.

Fig.3.

## DOCUMENTS CONSIDERED TO BE RELEVANT

| Category | Citation of document with indication, where appropriate, of relevant passages | Relevant to claim | CLASSIFICATION OF THE APPLICATION (Int Cl 3) |
|---|---|---|---|
| A | DE-B-1 209 831 (V. PLATEN)<br><br>* Figures 1, 2 *<br><br>--- | 1,2,4,5 | F 16 K 17/04 |
| A | US-A-2 820 474 (GREENWOOD et al.)<br>* Figure 1 *<br><br>--- | 1,3 | |
| A | DE-U-6 906 912 (SEETRU)<br>* Figures 1-3 *<br><br>--- | 2,4,5 | |
| A | FR-A- 71 338 (OFFICE NATIONAL D'ETUDES ET DE RECHERCHES AERONAUTIQUES)<br>* Figures 1-3 *<br><br>--- | 3 | |
| A | DE-A-1 400 550 (NORDISKA)<br><br>----- | | **TECHNICAL FIELDS SEARCHED (Int. Cl. 3)**<br><br>F 16 K 1/00<br>F 16 K 17/00 |

The present search report has been drawn up for all claims

| Place of search<br>BERLIN | Date of completion of the search<br>28-09-1984 | Examiner<br>SCHLABBACH M |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82